# EUROPÄISCHE PATENTSCHRIFT

(11) **EP 0 877 058 B1**
(45) Veröffentlichungstag und Bekanntmachung des Hinweises auf die Patenterteilung: **03.07.2002**
(21) Anmeldenummer: 98810373.5
(22) Anmeldetag: 28.04.1998
(51) Int. Cl.: C09B 67/22, C09B 57/00

(54) **Diketopyrrolopyrrolzusammensetzungen**
Diketopyrrolopyrrol compositions
Compositions de dicétopyrrolopyrole

(30) Priorität: 06.05.1997 CH 105497
(43) Veröffentlichungstag der Anmeldung: 11.11.1998
(73) Patentinhaber: Ciba Specialty Chemicals Holding Inc., 4057 Basel (CH)
(72) Erfinder: Wallquist, Olof, 1723 Marly (CH); Schlöder, Ingo, 1753 Matran (CH)

(56) Entgegenhaltungen:
- EP-A- 0 181 290
- EP-A- 0 256 983
- EP-A- 0 511 165
- EP-A- 0 635 539
- EP-A- 0 764 696
- DE-A- 4 037 556
- JP-A- 3 026 767

## Beschreibung

Die vorliegende Erfindung betrifft Stoffzusammensetzungen aus speziell mit Carbonamidgruppen substituierten Diketopyrrolopyrrolen und ihre Verwendung zur Verbesserung des Glanzes und der Rheologie von Diketopyrrolopyrrol-Pigmenten.

In JP-A 91-26767 werden Diketopyrrolopyrrole mit 1 bis 4 speziellen Aminogruppen enthaltenden Substituenten, unter vielen anderen auch die Verbindung der Formel 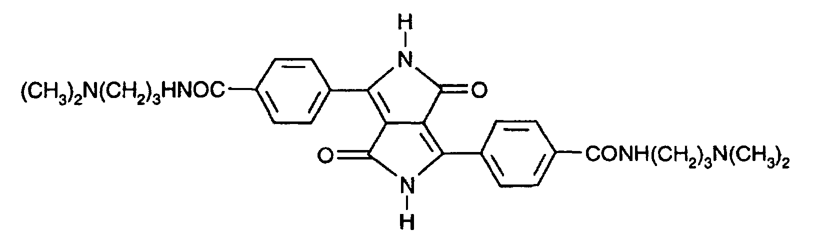 und ihre Verwendung als Dispergierhilfsmittel für Pigmente beschrieben. Solche Verbindungen verleihen den Pigmenten gutes rheologisches Verhalten und den damit erhaltenen Ausfärbungen einen schönen Glanz.

In DE 40 37 556 wird beschrieben, dass Beimengungen von Stoffzusammensetzungen aus drei Diketopyrrolopyrrolen die Rheologie verbesseren können, allerdings müssen diese Diketopyrrolopyrrole partiell mit Sulfogruppen substituiert sein.

Es ist nun gefunden worden, dass diese Eigenschaften ganz überraschend verbessert werden können, wenn Stoffzusammensetzungen aus 3 verschiedenen Diketodiphenylpyrrolopyrrolen verwendet werden, wovon 2, eine in asymmetrischer und eine in symmetrischer Anordnung, in p-, oder bevorzugt in m-Stellung des Phenyls eine bzw. zwei spezielle Carbonamidgruppen tragen.

Die vorliegende Erfindung betrifft demnach Stoffzusammensetzungen enthaltend mindestens 3 Diketopyrrolopyrrole der Formeln 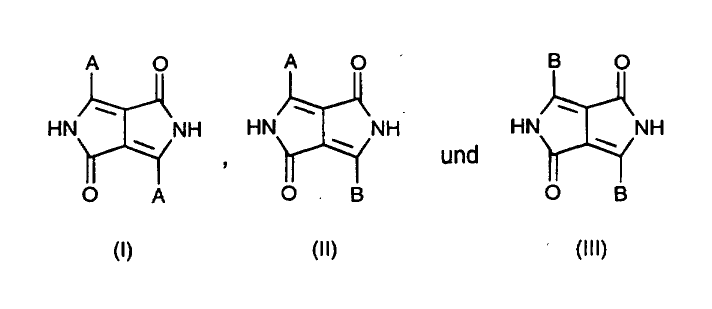 worin
A eine Gruppe 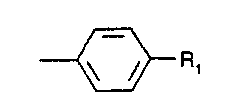 und
B eine Gruppe 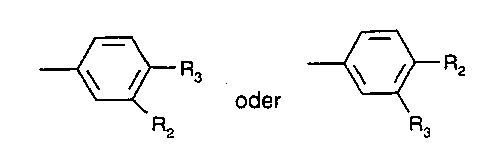 sind,
R₁ C₁-C₆-Alkyl, C₁-C₆-Alkoxy, C₁-C₆-Alkylthio, Halogen oder Phenyl bedeutet,
R₂ eine Gruppe COX ist, worin
X NR₄R₅ oder einen heterocyclischen Rest enthaltend mindestens 2 N-Atome, wobei das eine N-Atom mit der Carbonylgruppe ein Amid bildet, bedeutet,
R₃ Wasserstoff, Halogen oder C₁-C₆-Alkyl ist,
R₄ Wasserstoff, eine Gruppe -(CH₂)ₘ-CH₃ oder R₅ und
R₅ eine Gruppe -(CH₂)ₙ-N(R₆)₂, 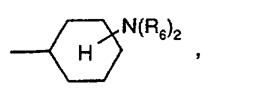 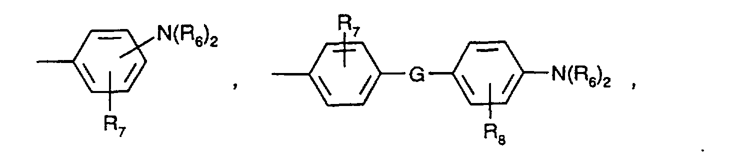 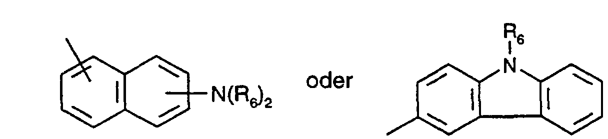 bedeuten,
G eine direkte Bindung, -CH₂-, -CH(CH₃)-, -C(CH₃)₂-, -CH=N-, -N=N-, -O-, -S-, -SO-, -SO₂- oder -NR₉- sein kann,
R₆ C₁-C₆-Alkyl ist,
R₇ und R₈ unabhängig voneinander Wasserstoff, Halogen, C₁-C₆-Alkyl bedeuten,
R₉ Wasserstoff oder Methyl ist,
m Null oder eine Zahl von 1 bis 17 und
n eine Zahl von 2 bis 6 bedeuten.

Bedeuten etwaige Substituenten C₁-C₆-Alkyl, so handelt es sich um unverzweigtes C₁-C₆-Alkyl, wie beispielsweise Methyl, Ethyl, n-Propyl, n-Butyl, n-Pentyl oder n-Hexyl, oder um verzweigtes C₁-C₆-Alkyl, wie beispielsweise Isopropyl, n-Butyl, sec.-Butyl, tert.-Butyl, sec.-Amyl oder tert.-Amyl

In C₁-C₆-Alkoxy und C₁-C₆-Alkylthio für R₁ trifft Alkyl die gleiche Ausdeutung zu, wie eben für C₁-C₆-Alkyl.

R₁, R₃, R₇ und R₈ bedeuten als Halogen z.B. Jod, Brom oder insbesondere Chlor.

Bedeutet X einen heterocyclischen Rest enthaltend mindestens 2 N-Atome, so handelt es sich z.B. um Heterocylen der Formeln 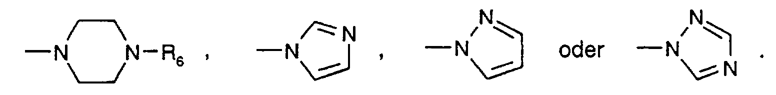 B ist bevorzugt eine Gruppe

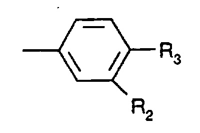

Von besonderem Interesse sind Stoffzusammensetzungen gemäss der oben angegebenen Definitionen, worin
R₁ Methyl, verzweigtes C₁-C₆-Alkyl, Phenyl, Halogen
R₂ CONR₅R₆ oder 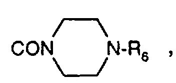
R₃ und R₄ Wasserstoff,
R₅ eine Gruppe -(CH₂)ₙ-N(CH₃)₂ oder 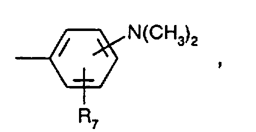
R₇ Wasserstoff oder Methyl sind und
n eine Zahl von 2 bis 6 bedeutet.

Bevorzugt werden Stoffzusammensetzungen gemäss der oben angegebenen Definition, worin
R₁ Methyl, tert.-Butyl, Phenyl oder Chlor,
R₅ eine Gruppe -(CH₂)ₙ-N(CH₃)₂ und
n 2 oder 3 bedeuten.

Die Herstellung der erfindungsgemässen Stoffzusammensetzungen erfolgt in Analogie zur allgemein bekannten Herstellungsmethode für Diketopyrrolopyrrole, wie sie in US 4 579 949 beschrieben ist, und zwar durch Mischsynthese, wobei z.B. 1 Mol eines Bernsteinsäurediesters mit 2 Mol eines Gemisches mindestens zweier Nitrile der Formeln 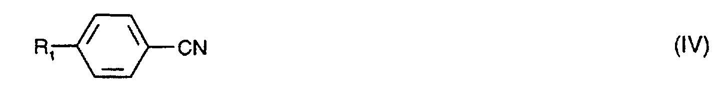 und 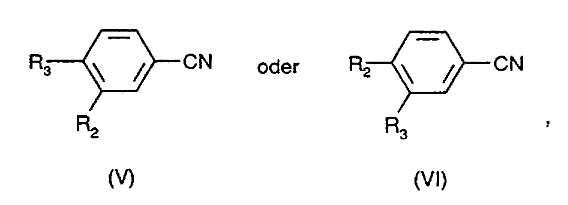 worin R₁. R₂ und R₃ die oben angegebene Bedeutung haben, umgesetzt wird. Die beiden Nitrile der Formeln IV und V oder VI werden zweckmässig im Molverhältnis 1:4 bis 4:1 zueinander eingesetzt.

Die Nitrile der Formeln IV, V und VI sind bekannte Verbindungen. Sollten einige noch neu sein, so können sie in Analogie zu allgemein bekannten Verfahren hergestellt werden.

Wie bereits erwähnt ist gefunden worden, dass die Beimischung eines kleineren Anteils einer erfindungsgemässen Stoffzusammensetzung der oben angegebenen Definition zu einem Diketopyrrolopyrrolpigment eine ganz überraschende Verbesserung des rheologischen Verhaltens des letzteren und des Glanzes der damit erhaltenen Ausfärbungen zur Folge hat. Insbesondere wird das rheologische Verhalten von transparenten Diketopyrrolopyrrol-Pigmenten verbessert. Zudem wird der Farbton des Diketopyrrolopyrrol-Pigmentes nicht oder höchstens in sehr geringem Ausmass durch die erfindungsgemässen Stoffzusammensetzungen verändert.

Des weiteren wurde gefunden, dass auch eine Beimischung von Diketopyrrolopyrrolen der Formel II mit den oben angegebenen Definitionen und Bevorzugungen allein zu einem Diketopyrrolopigment ebenfalls eine unerwartete Verbesserung des rheologischen Verhaltens und des Glanzes bewirkt.

Die Diketopyrrolopyrrole der Formel II kann man beispielsweise nach der in US 4,778,899 beschriebenen Methode herstellen.

Ein weiterer Gegenstand der Erfindung sind demnach Pigmentzusammensetzungen enthaltend
a) 80-99,9 Gew.% mindestens eines 1,4-Diketopyrrolo[3,4-c]pyrrol-Pigments, insbesondere eines der Formel 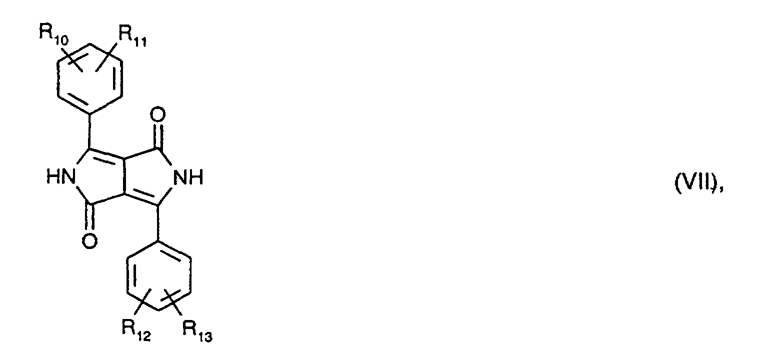 worin R₁₀, R₁₁, R₁₂ und R₁₃ unabhängig voneinander Wasserstoff, Cl, Br, CH₃, OCH₃, CO₂R₆ C(CH₃)₃, CN oder Phenyl bedeuten, und
b) 0,1-20 Gew.% einer Stoffzusammensetzung enthaltend 3 Diketopyrrolopyrrole der Formeln I, II und III oder ein Diketopyrrolopyrrol der Formel II der oben angegebenen Definition.

Bevorzugt setzt man als Komponente b) eine Stoffzusammensetzung enthaltend 3 Diketopyrrolopyrrole der Formeln I, II und III der oben angegebenen Definition ein.

Bevorzugte 1,4-Diketopyrrolo[3,4-c]pyrrole der Formel VII sind jene, worin R₁₀ und R₁₂ unabhängig voneinander Cl, CH₃, C(CH₃)₃, CN oder Phenyl bedeuten und R₁₁ und R₁₃ Wasserstoff sind.

Bevorzugt sind Pigmentzusammensetzungen enthaltend 1,4-Diketopyrrolo[3,4-c]pyrrole der Formel VII und eine Stoffzusammensetzung enthaltend 3 Diketopyrrolopyrrole der Formeln I, II und III, worin
- R₁₁ und R₁₃: für Wasserstoff steht, und
- R₁₀, R₁₂ und R₁: gleich sind, und
bevorzugt für Methyl, tert.-Butyl, tert.-Amyl, Phenyl oder Chlor
stehen.

Bei den 1,4-Diketopyrrolopyrrolen der Formel VII handelt es sich um bekannte Verbindungen.

Das Vermischen der beiden Komponenten a) und b) erfolgt nach beliebigen, allgemein bekannten Methoden. Die Komponente b) kann z.B. als feuchter Presskuchen oder als Pulver während der Synthese, der Rekristallisation oder der Filtration der Komponente a) dieser letzteren beigemischt werden. Die Komponenten a) und b) können auch durch intensives Mischen bzw. Mahlen vermischt werden oder sie können dem zu färbenden hochmolekularen organischen Material zugegeben werden und während des Dispersionsprozesses vermischt werden.

Die erfindungsgemässen Pigmentzusammensetzungen können als Pigmente zum Färben von hochmolekularem organischem Material verwendet werden.

Hochmolekulare organische Materialien, die mit den erfindungsgemässen Pigmentzusammensetzungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkylharze, Phenoplaste, Polycarbonate, Polyolefine, Polystyrol, Polyvinylchlorid, Polytetrafluoroethylen, Polyamide, Polyurethane, Polyester, Polyether-ketone, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen. Bezogen auf das zu pigmentierende hochmolekulare organische Material kann man die erfindungsgemässen Pigmentzusammensetzungen in einer Menge von 0,01 bis 30 Gew.%, vorzugsweise von 0,1 bis 10 Gew.%, einsetzen.

Zum Pigmentieren von Lacken und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie hohe Farbstärke, gute Dispergierbarkeit, gute Überlackier-, Migrations-, Hitze-, Licht- und Wetterbeständigkeit, geringe Viskosität sowie durch einen guten Glanz aus.

Ferner weisen die erfindungsgemässen Pigmentzusammensetzungen im Vergleich zu den unmodifizierten Basispigmenten verbesserte anwendungstechnische Eigenschaften in der Applikation auf, wie eine verbesserte Rheologie und Lagerbeständigkeit, geringere Trenneffekte wie Ausschwimmen bei der Mitverwendung von z.B. Weisspigmenten, und eine geringere Flockulationstendenz. Infolge der guten rheologischen Eigenschaften dieser Kompositionen ist es auch möglich, Anstrichstoffe und Lacke hoher Konzentration (sogenannte high loadings) herzustellen. Dabei wird zusätzlich ein hoher Glanz erreicht. Der Farbton wird durch die Beimischung der erfindungsgemässen Pigmentzu-sammensetzungen nicht oder nur in sehr geringem Ausmass verändert. Sie eignen sich demnach vorzugsweise zum Färben von Druckfarben und Lacken, insbesondere für Metalleffektlackierungen.

Die nachfolgenden Beispiele erläutern die Erfindung.

Beispiel 1: In einem Sulfierkolben werden unter Stickstoff 9,2 g Natrium in einem Gemisch von 50 ml trockenem t-Amylalkohol und 140 ml trockenem Xylol gegeben, und bei 150°C gerührt bis das Natrium vollständig abreagiert hat. Nun werden 18,5 g 3-Cyano-(3-dimethylaminopropyl)-benzamid und 12.74 g 4-t-Butylbenzonitril zugegeben. Anschliessend tropft man langsam bei 120°C eine Lösung von 23.95 g Bersteinsäure-di-t-butylester in 60 ml Xylol dazu. Das Reaktioinsgemisch wird noch 2 Stunden am Rückfluss gerührt, auf 50°C abgekühlt, zu einem Gemisch aus 670 ml Wasser und 24.6 g Essigsäure gegeben und der Sulfierkolben mit 160 ml Methanol gespült. Anschliessend wird das Gemisch mit Wasserdampf destilliert, 18 Stunden bei Raumtemperatur gerührt und filtriert. Der Rückstand wird zuerst mit viel Wasser, dann mit wenig Gemisch Wasser/ Methanol 1:1 gewaschen und über Nacht bei 80°C im Vakuumschrank getrocknet. Ausbeute: 24,75 g (65 %) eines orangen Pulvers.

| Analyse | C | H | N |
|---|---|---|---|
| Gef. | 72.07 | 7.12 | 8.75 |
| Ber. | 72.00 | 7.18 | 8.69 |

### Beispiel 2:

In einem Sulfierkolben werden unter Stickstoff 1.15 g Natrium in ein Gemisch von 7 ml trockenem t-Amylalkohol und 13 ml trockenem Xylol gegeben und bei 150°C gerührt, bis das Natrium vollständig abreagiert hat. Zur entstandenen Lösung werden dann bei 90°C 2.31 g 3-Cyano-(3-dimethylaminopropyl)-benzamid und 1.37 g 4-Chlorbenzonitril zugegeben. Anschliessend tropft man langsam bei 120°C eine Lösung von 3.07 g Bernsteinsäure-di-t-butylester in 10 ml Xylol zu. Das Reaktionsgemisch wird noch 2 Stunden am Rückfluss gerührt, auf 60°C abgekühlt und auf ein Gemisch aus 85 ml Wasser und 3.06 g Essigsäure gegeben. Der Sulfierkolben wird mit 25 ml Methanol nachgespült. Anschliessend wird das Gemisch mit Wasserdampf destilliert, 18 Stunden bei Raumtemperatur gerührt und filtriert. Der Rückstand wird mit viel Wasser und dann mit wenig Gemisch Wasser/Methanol 1:1 gewaschen und bei 80°C im Vakuumtrockenschrank getrocknet. Man erhält 2.32 g eines roten Pulvers.

| Analyse | C | H | N | Cl |
|---|---|---|---|---|
| Gef. | 61.69 | 4.33 | 9.50 | 11.98% |
| Ber. | 63.93 | 5.14 | 12.42 | 7.86 % |

### Beispiel 3:

In einem Sulfierkolben werden unter Stickstoff 1.15 g Natrium in ein Gemisch von 7 ml trockenem t-Amylalkohol und 13 ml trockenem Xylol gegeben und bei 150°C gerührt, bis das Natrium vollständig abreagiert hat. Zur entstandenen Lösung werden dann bei 90°C 2.31 g 3-Cyano-(3-dimethylaminopropyl)-benzamid und 1.79 g 4-Biphenylnitril zugegeben. Anschliessend tropft man langsam bei 120°C eine Lösung von 3.07 g Bernsteinsäure-di-t-butylester in 10 ml Xylol zu. Das Reaktionsgemisch wird noch 2 Stunden am Rückfluss gerührt, auf 60°C abgekühlt und auf ein Gemisch aus 85 ml Wasser und 3.06 g Essigsäure gegeben. Der Sulfierkolben wird mit 25 ml Methanol nachgespült. Anschliessend wird das Gemisch mit Wasserdampf destilliert, 18 Stunden bei Raumtemperatur gerührt und filtriert. Der Rückstand wird mit viel Wasser und dann mit wenig Gemisch Wasser/Methanol 1:1 gewaschen und bei 80°C im Vakuumtrockenschrank getrocknet. Man erhält 2.5 g eines roten Pulvers.

| Analyse | C | H | N |
|---|---|---|---|
| Gef. | 74.13 | 5.36 | 8.47 % |
| Ber. | 73.15 | 5.73 | 11.37% |

### Beispiel 4:

In einem Sulfierkolben werden unter Stickstoff 1.15 g Natrium in ein Gemisch von 7 ml trockenem t-Amylalkohol und 13 ml trockenem Xylol gegeben und bei 150°C gerührt, bis das Natrium vollständig abreagiert hat. Zur entstandenen Lösung werden dann bei 90°C 2.31 g 3-Cyano-(3-dimethylaminopropyl)-benzamid und 1.17 g 4-Toluonitril zugegeben. Anschliessend tropft man langsam bei 120°C eine Lösung von 3.07 g Bernsteinsäure-di-t-butylester in 10 ml Xylol zu. Das Reaktionsgemisch wird noch 2 Stunden am Rückfluss gerührt, auf 60°C abgekühlt und auf ein Gemisch aus 85 ml Wasser und 3.06 g Essigsäure gegeben. Der Sulfierkolben wird mit 25 ml Methanol nachgespült. Anschliessend wird das Gemisch mit Wasserdampf destilliert, 18 Stunden bei Raumtemperatur gerührt und filtriert. Der Rückstand wird mit viel Wasser und dann mit wenig Gemisch Wasser/Methanol 1:1 gewaschen und bei 80°C im Vakuumtrockenschrank getrocknet. Man erhält 1.23 g eines roten Pulvers.

| Analyse | C | H | N |
|---|---|---|---|
| Gef. | 67.43 | 6.08 | 10.49% |
| Ber. | 69.75 | 6.09 | 13.01% |

### Beispiel 5: (wie Beispiel 1)

In einem Sulfierkolben werden unter Stickstoff 1.15 g Natrium in ein Gemisch von 7 ml trockenem t-Amylalkohol und 13 ml trockenem Xylol gegeben und bei 150°C gerührt, bis das Natrium vollständig abreagiert hat. Zur entstandenen Lösung werden dann bei 90°C 2.31 g 3-Cyano-(3-dimethylaminopropyl)-benzamid und 1.33 g 4-Methoxybenzonitril zugegeben. Anschliessend tropft man langsam bei 120°C eine Lösung von 3.07 g Bernsteinsäure-di-t-butylester in 10 ml Xylol zu. Das Reaktionsgemisch wird noch 2 Stunden am Rückfluss gerührt, auf 60°C abgekühlt und auf ein Gemisch aus 85 ml Wasser und 3.06 g Essigsäure gegeben. Der Sulfierkolben wird mit 25 ml Methanol nachgespült. Anschliessend wird das Gemisch mit Wasserdampf destilliert, 18 Stunden bei Raumtemperatur gerührt und filtriert.

Der Rückstand wird mit viel Wasser und dann mit wenig Gemisch Wasser/Methanol 1:1 gewaschen und bei 80°C im Vakuumtrockenschrank getrocknet. Man erhält 0.71 g eines roten Pulvers.

| Analyse | C | H | N |
|---|---|---|---|
| Gef. | 65.12 | 5.61 | 8.83 % |
| Ber. | 67.25 | 5.87 | 12.55% |

### Beispiel 6:

In einem Sulfierkolben werden unter Stickstoff 30 ml tert.-Amylalkohol vorgelegt. Nach der Zugabe von 0.76 g Natrium wird das Gemisch auf 92-102°C aufgewärmt. Das geschmolzene Natrium wird unter heftigem Rühren über Nacht bei 100-107°C gehalten. Zur entstandenen Lösung werden dann bei 100°C 2.77 g 3-Cyano-(3-dimethylaminopropyl)-benzamid und anschliessend während 2 Stunden portionenweise 3.16 g des Pyrrolinons der Formel (X) 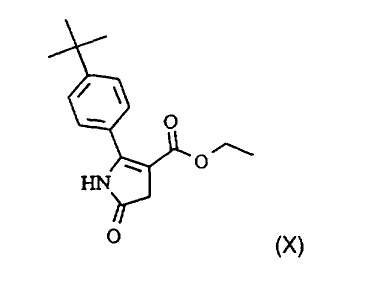 [hergestellt nach Ann. 260, S. 137 (1890)] zugegeben. Das Reaktionsgemisch wird noch 3 Stunden am Rückfluss gerührt, auf 60°C abgekühlt und auf ein Gemisch aus 25 ml Wasser und 25 ml Methanol gegeben. Das Gemisch wird 4 Stunden bei 70°C gerührt, auf Raumtemperatur abgekühlt und filtriert. Der Rückstand wird mit Wasser und Methanol gewaschen bis das Filtrat farblos ist, und dann bei 80°C im Vakuumtrockenschrank getrocknet. Man erhält 1.1 g eines orangen Pulvers.

| Analyse | C | H | N |
|---|---|---|---|
| Gef. | 70.54 | 7.01 | 11.82 |
| Ber. | 71.16 | 6.82 | 11.86 |

### Beispiel 7:

In einem Sulfierkolben werden unter Stickstoff 4.60 g Natrium in ein Gemisch von 25 ml trockenem t-Amylalkohol und 90 ml trockenem Xylol gegeben und bei 150°C gerührt, bis das Natrium vollständig abreagiert hat. Zur entstandenen Lösung werden dann bei 90°C 9.25 g 3-Cyano-(3-dimethylaminopropyl)-benzamid und 4.73 g 3-Toluonitril zugegeben. Anschliessend tropft man langsam bei 120°C eine Lösung von 11.98 g Bernsteinsäure-di-t-butylester in 30 ml Xylol zu. Das Reaktionsgemisch wird noch 2 Stunden am Rückfluss gerührt, auf 50°C abgekühlt und auf ein Gemisch aus 325 ml Wasser und 12.31 g Essigsäure gegeben. Der Sulfierkolben wird mit 70 ml Methanol nachgespült. Anschliessend wird das Gemisch mit Wasserdampf destilliert, 18 Stunden bei Raumtemperatur gerührt und filtriert. Der Rückstand wird mit viel Wasser und dann mit wenig Gemisch Wasser/Methanol 1:1 gewaschen und bei 80°C im Vakuumtrockenschrank getrocknet. Man erhält 13.4 g eines roten Pulvers.

| Analyse | C | H | N |
|---|---|---|---|
| Gef. | 69.59 | 6.44 | 11.01% |
| Ber. | 69.75 | 6.09 | 13.01% |

### Beispiel 8:

In einem Sulfierkolben werden unter Stickstoff 3.68 g Natrium in ein Gemisch von 20 ml trockenem t-Amylalkohol und 56 ml trockenem Xylol gegeben und bei 150°C gerührt, bis das Natrium vollständig abreagiert hat. Zur entstandenen Lösung werden dann bei 90°C 7.40 g 3-Cyano-(3-dimethylaminopropyl)-benzamid und 4.10 g Isophtalsäure-dinitril zugegeben. Anschliessend tropft man langsam bei 120°C eine Lösung von 9.58 g Bernsteinsäure-di-t-butylester in 24 ml Xylol zu. Das Reaktionsgemisch wird noch 2 Stunden am Rückfluss gerührt, auf 50°C abgekühlt und auf ein Gemisch aus 270 ml Wasser und 9.85 g Essigsäure gegeben. Der Sulfierkolben wird mit 60 ml Methanol nachgespült. Anschliessend wird das Gemisch mit Wasserdampf destilliert, 18 Stunden bei Raumtemperatur gerührt und filtriert. Der Rückstand wird mit viel Wasser und dann mit wenig Gemisch Wasser/Methanol 1:1 gewaschen und bei 80°C im Vakuumtrockenschrank getrocknet. Man erhält 12.2 g eines roten Pulvers.

| Analyse | C | H | N |
|---|---|---|---|
| Gef. | 66.60 | 5.78 | 13.45% |
| Ber. | 68.01 | 5.25 | 15.86% |

### Beispiel 9:

In einem Sulfierkolben werden unter Stickstoff 4.60 g Natrium in ein Gemisch von 25 ml trockenem t-Amylalkohol und 90 ml trockenem Xylol gegeben und bei 150°C gerührt, bis das Natrium vollständig abreagiert hat. Zur entstandenen Lösung werden dann bei 90°C 7.40 g 3-Cyano-(3-dimethylaminopropyl)-benzamid und 5.50 g 3,4-Dichlorbenzonitril zugegeben. Anschliessend tropft man langsam bei 120°C eine Lösung von 11.98 g Bernsteinsäure-di-t-butylester in 30 ml Xylol zu. Das Reaktionsgemisch wird noch 2 Stunden am Rückfluss gerührt, auf 50°C abgekühlt und auf ein Gemisch aus 325 ml Wasser und 12.31 g Essigsäure gegeben. Der Sulfierkolben wird mit 70 ml Methanol nachgespült. Anschliessend wird das Gemisch mit Wasserdampf destilliert, 18 Stunden bei Raumtemperatur gerührt und filtriert. Der Rückstand wird mit viel Wasser und dann mit wenig Gemisch Wasser/Methanol 1:1 gewaschen und bei 80°C im Vakuumtrockenschrank getrocknet. Man erhält 10.5 g eines roten Pulvers.

| Analyse | C | H | N |
|---|---|---|---|
| Gef. | 58.88 | 4.59 | 8.37 % |
| Ber. | 59.39 | 4.57 | 11.54% |

### Beispiel 10: Herstellung einer Pigmentzusammensetzung

45.5 g einer Presskuchens (34.1 %) eines Pigmentgemisches aus 1,4-Diketo-3,6-diphenylpyrrolo[3,4-c]pyrrol, 1,4-Diketo-3-phenyl-6-(4-chlorphenyl)-pyrrolo[3,4-c]pyrrol und 1,4-Diketo-3,6-di-(4-chlorphenyl)-pyrrolo[3,4-c]pyrrol, hergestellt gemäss Beispiel 1, US Patent 5476949, werden in 450 ml Wasser 1 Stunde bei Raumtemperatur verrührt und dann 18 Stunden stehen gelassen (= Suspension 1 ). Gleichzeitig werden 0.989 g Produkt aus Beispiel 1 in 30 ml Methanol während einer Stunde bei Raumtemperatur verrührt, mit 30 ml Wasser versetzt und ebenfalls 18 Stunden stehengelassen ( = Suspension 2). Beide Suspensionen werden nochmals einzeln für 1 Stunde bei Raumtemperatur verrührt. Anschliessend wird der Suspension 2 wird zu Suspension 1 gegossen. Der Rückstand wird mit etwas Wasser gespült und während 2 Minuten mit einem Ultraturrax bei 13500 bis 20500 UpM gut durchmischt. Dem Schäumen wird mit etwas 1.6 Hexandiol entgegengewirkt. Die Suspension wird für 4 Stunden bei Raumtemperatur verrührt, filtriert, mit Wasser gewaschen und bei 80°C im Vakuumschrank getrocknet. Man erhält 16.1 g eines orange-roten Pulvers.

Beispiel 11: Man verfährt analog Beispiel 10, ersetzt aber das Pigmentgemisch im Beispiel 10 mit 36.3 g Presskuchen (2.7 % ) von 1,4-Diketo-3,6-di-(4-biphenyl)-pyrrolo[3,4-c]pyrrol, hergestellt gemäss Beispiel 19, US Patent 4579949. Man erhält 16,0 g eines dunkelroten Produktes.

Beispiel 12: Man verfährt analog Beispiel 10, ersetzt aber das Pigmentgemisch im Beispiel 10 mit 50.1 g Presskuchen (30.9 % ) von 1,4-Diketo-3,6-di-(4-chlorphenyl)-pyrrolo[3,4-c]pyrrol, hergestellt gemäss Beispiel 6, US Patent 4579949. Man erhält 16.5 g eines roten Produktes.

Beispiel 13: Herstellung einer Zusammensetzung enthaltend hochmolekulares organisches Material und Pigmentgemische aus Beispiel 10:
5,0 g des Pigmentgemisches aus Beispiel 10, 200 g Glasperlen (Ø = 2 mm), 28,5 g CAB-Lösung bestehend aus
   41,0 g Celluloseacetobutyrat ®CAB 531.1, 20% ig in Butanol/Xylol 2:1 (Eastman Chem.)
   1,5 g Zirkonium Octoat,
   18,5 g ®SOLVESSO 150 (ESSO)
   21,5 g Butylacetat und
   17,5 g Xylol
38,0 g Polyesterharz ®DYNAPOL H700 (Dynamit Nobel) und 28,5 g Melaminharz MAPRENAL MF650 (Hoechst) werden zusammen während 360 Minuten mit einer Schüttelmaschine dispergiert. Das Fliessverhalten des so erhaltenen Lacks wird mit einem Viskosimeter Mettler RM 180 (25°C) gemessen. Der Lack zeichnet sich durch ausgezeichnete rheologischen Eigenschaften aus.

## Patentansprüche

1. Stoffzusammensetzungen enthaltend mindestens 3 Diketopyrrolopyrrole der Formeln 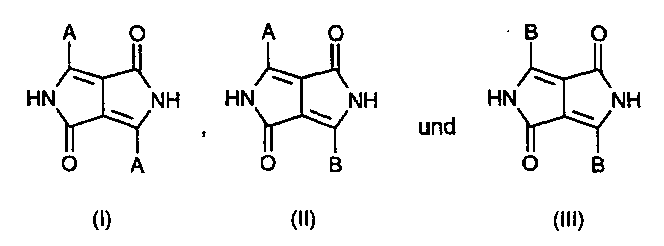 worin
A eine Gruppe 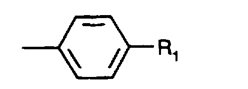 und
B eine Gruppe 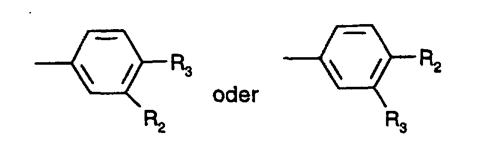 sind,
R₁ C₁-C₈-Alkyl, C₁-C₆-Alkoxy, C₁-C₆-Alkylthio, Halogen oder Phenyl bedeutet,
R₂ eine Gruppe COX ist, worin
X NR₄R₅ bedeutet,
R₃ Wasserstoff, Halogen oder C₁-C₆-Alkyl ist,
R₄ Wasserstoff, eine Gruppe -(CH₂)ₘ-CH₃ oder R₅ und
R₅ eine Gruppe -(CH₂)ₙ-N(R₆)₂, 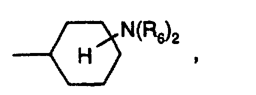 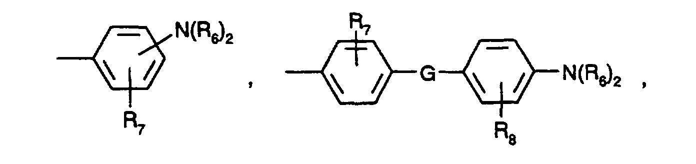 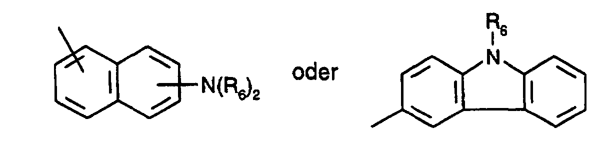 bedeuten,
G eine direkte Bindung, -CH₂-, -CH(CH₃)-, -C(CH₃)₂-, -CH=N-, -N=N-, -O-, -S-, -SO-, -SO₂- oder -NR₉- sein kann,
R₆ C₁-C₆-Alkyl ist,
R₇ und R₈ unabhängig voneinander Wasserstoff, Halogen, C₁-C₆-Alkyl bedeuten,
R₉ Wasserstoff oder Methyl ist,
m Null oder eine Zahl von 1 bis 17 und
n eine Zahl von 2 bis 6 bedeuten.

2. Stoffzusammensetzungen gemäss Anspruch 1, **dadurch gekennzeichnet, dass**
R₁ Methyl, tert.-Butyl, tert.-Amyl, Phenyl oder Chlor,
R₃ und R₄ Wasserstoff,
R₅ eine Gruppe -(CH₂)ₙ-N(CH₃)₂ und
n 2 oder 3 bedeuten.

3. Pigmentzusammensetzungen enthaltend
a) 80-99,9 Gew.% mindestens eines 1,4-Diketopyrrolo[3,4-c]pyrrol-Pigmentes,
b) 0,1-20 Gew.% einer Stoffzusammensetzung enthaltend 3 Diketopyrrolopyrrole der Formeln I, II und III gemäss Anspruch 1 oder ein Diketopyrrolopyrrol der Formel II, wobei die 1,4-Diketopyrrolo[3,4-c]pyrrol-Pigmente nach a) unterschiedlich von der Stoffzusammensetzung nach b) und Diketopyrrolopyrrol der Formel II sind.",

4. Pigmentzusammensetzungen gemäss Anspruch 3, **dadurch gekennzeichnet, dass** man als Komponente b) 0,1-20 Gew.% einer Stoffzusammensetzung enthaltend 3 Diketopyrrolopyrrole der Formeln I, II und III gemäss Anspruch 1 einsetzt.

5. Pigmentzusammensetzungen gemäss Anspruch 3, **dadurch gekennzeichnet, dass** unter
a) ein 1,4-Diketopyrrolo[3,4-c]pyrrol-Pigment der Formel 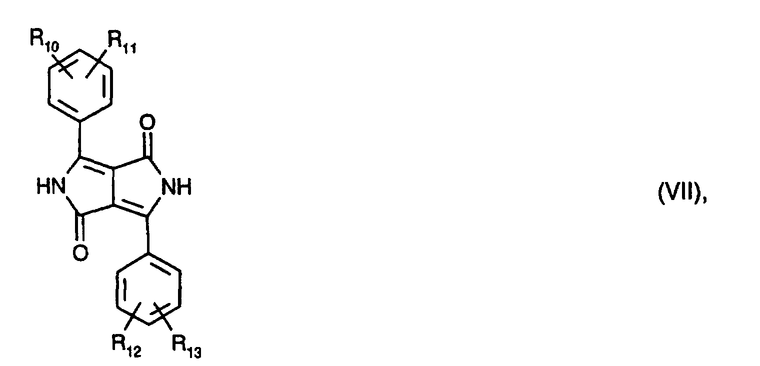
worin R₁₀, R₁₁, R₁₂ und R₁₃ unabhängig voneinander Wasserstoff, Cl, Br, CH₃, OCH₃, C(CH₃)₃, CN oder Phenyl bedeuten enthalten ist.

6. Pigmentzusammensetzungen gemäss Anspruch 3, **dadurch gekennzeichnet, dass** diese 1,4-Diketopyrrolo[3,4-c]pyrrole der Formel VII und eine Stoffzusammensetzung enthaltend 3 Diketopyrrolopyrrole der Formeln I, II und III, worin
R₁₁ und R₁₃ für Wasserstoff steht, und
R₁₀, R₁₂ und R₁ gleich sind,
enthält.

7. Pigmentzusammensetzungen gemäss Anspruch 6, **dadurch gekennzeichnet, dass**
R₁₀, R₁₂ und R₁ Methyl, tert.-Butyl, tert.-Amyl, Phenyl oder Chlor bedeuten.

8. Zusammensetzung, **dadurch gekennzeichnet, dass** sie hochmolekulares organisches Material und eine Pigmentzusammensetzung gemäss Anspruch 3 enthält.

9. Verfahren zur Herstellung von hochmolekularem organischem Material, **dadurch gekennzeichnet, dass** man dieses mit einer färberisch wirksamen Menge einer Pigmentzusammensetzung gemäss Anspruch 3 versieht.

10. Hochmolekulares organisches Material hergestellt gemäss Anspruch 9, **dadurch gekennzeichnet, dass** es ein Lack oder eine Druckfarbe ist.

## Claims

1. A substance composition comprising at least 3 diketopyrrolopyrroles of formulae 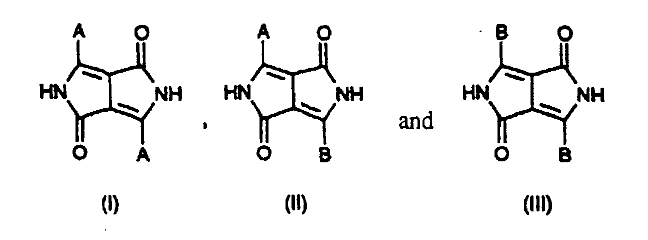 wherein
A is a 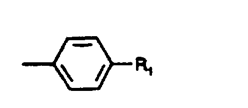 group and
B is a 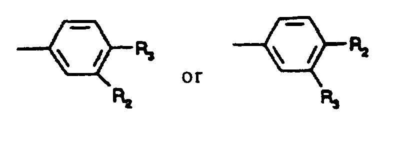 group,
R₁ is C₁-C₆alkyl, C₁-C₆alkoxy, C₁-C₆alkylthio, halogen or phenyl,
R₂ is a COX group, in which
X is NR₄R₅,
R₃ is hydrogen, halogen or C₁-C₆alkyl,
R₄ is hydrogen, a -(CH₂)ₘ-CH₃ group, or R₅ and
R₅ is a -(CH₂)ₙ-N(R₆)₂, 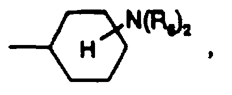 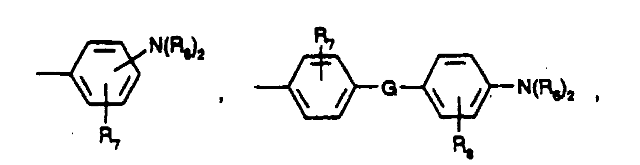 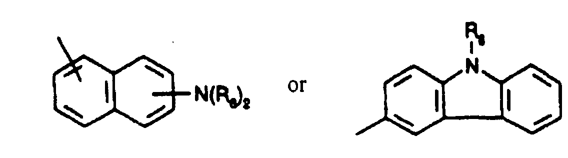 group,
G may be a direct bond, -CH₂-, -CH(CH₃)-, -C(CH₃)₂-, -CH=N-, -N=N-, -O-, -S-, -SO-, -SO₂- or -NR₉-,
R₆ is C₁-C₆alkyl,
R₇ and R₈ are each independently of the other hydrogen, halogen, C₁-C₆alkyl,
R₉ is hydrogen or methyl,
m is zero or a number from 1 to 17, and
n is a number from 2 to 6.

2. A substance composition according to claim 1, wherein
R₁ is methyl, tert-butyl, tert-amyl, phenyl or chloro,
R₃ and R₄ are hydrogen,
R₅ is a -(CH₂)ₙ-N(CH₃)₂ group, and
n is 2 or 3.

3. A pigment composition comprising
a) 80-99.9% by weight of at least one 1,4-diketo-pyrrolo[3,4-c]pyrrole pigment, and
b) 0.1-20% by weight of a substance composition comprising 3 diketopyrrolopyrroles of formulae I, II and III according to claim 1 or a diketopyrrolopyrrole of formula II,
the 1,4-diketopyrrolo[3,4-c]pyrrole pigments of a) being different from the substance composition b) and diketopyrrolopyrrole of formula II.

4. A pigment composition according to claim 3, wherein component b) is 0.1-20% by weight of a substance composition comprising 3 diketopyrrolopyrroles of formulae I, II and III according to claim 1.

5. A pigment composition according to claim 3, wherein a) comprises a 1,4-diketopyrrolo[3,4-c]pyrrole pigment of formula 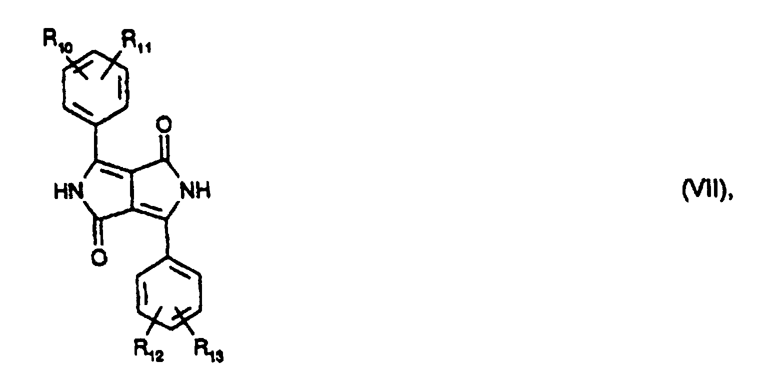 in which R₁₀, R₁₁, R₁₂ and R₁₃ are each independently of one another hydrogen, Cl, Br, CH₃, OCH₃, C(CH₃)₃, CN or phenyl.

6. A pigment composition according to claim 3, which comprises 1,4-diketopyrrolo[3,4-c]pyrroles of formula VII and a substance composition comprising 3 diketopyrrolopyrroles. of formulae I, II and III in which
R₁₁ and R₁₃ are hydrogen, and
R₁₀, R₁₂ and R₁ are identical.

7. A pigment composition according to claim 6, wherein
R₁₀, R₁₂ and R₁ are methyl, tert-butyl, tert-amyl, phenyl or chloro.

8. A composition which comprises high molecular weight organic material and a pigment composition according to claim 3.

9. A process for preparing high molecular weight organic material, which comprises providing said material with a tinctorially effective amount of a pigment composition according to claim 3.

10. A high molecular weight organic material prepared according to claim 9, which is a paint or printing ink.

## Revendications

1. Compositions contenant au moins 3 dicétopyrrolopyrroles ayant les formules 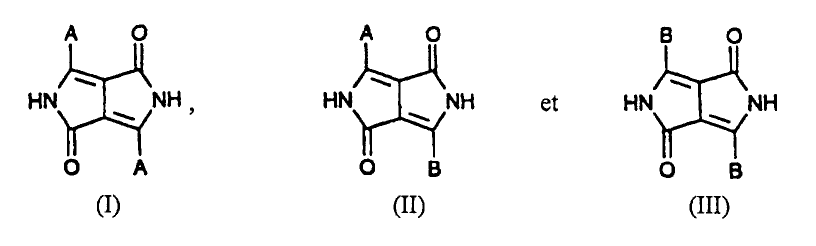 dans lesquelles
A représente un groupe 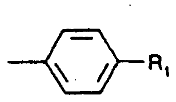 et
B représente un groupe 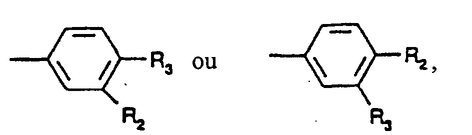
R₁ est un groupe alkyle en C₁-C₆, alcoxy en C₁-C₆, alkylthio en C₁-C₆, halogéno ou phényle,
R₂ représente un groupe COX dans lequel
X représente un groupe NR₄R₅,
R₃ représente un atome d'hydrogène ou d'halogène ou un groupe alkyle en C₁-C₆,
R₄ représente un atome d'hydrogène, un groupe -(CH₂)ₘ-CH₃ ou R₅, et
R₅ représente un groupe -(CH₂)ₙ-N(R₆)₂, 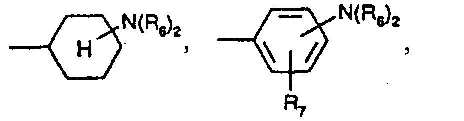 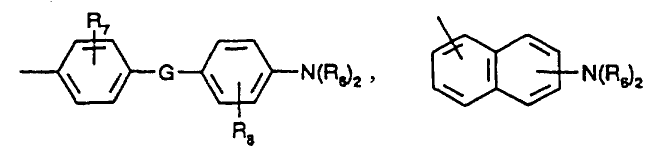 ou 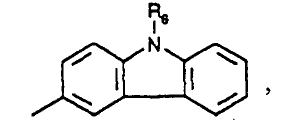
G peut être une liaison directe ou un groupe -CH₂-, -CH(CH₃)-, -C(CH₃)₂-, -CH=N-, -N=N-, -O-, -S-, -SO-, -SO₂- ou -NR₉-,
R₆ est un groupe alkyle en C₁-C₆,
R₇ et R₈ représentent, indépendamment l'un de l'autre, un atome d'hydrogène ou d'halogène ou un groupe alkyle en C₁-C₆,
R₉ est un atome d'hydrogène ou un groupe méthyle,
m est 0 ou un nombre de 1 à 17 et
n est un nombre de 2 à 6.

2. Compositions selon la revendication 1, **caractérisées en ce que**
R₁ représente un groupe méthyle, tert-butyle, phényle ou chloro,
R₃ et R₄ sont des atomes d'hydrogène,
R₅ représente un groupe -(CH₂)ₙ-N(CH₃)₂ et
n est 2 ou 3.

3. Compositions de pigments contenant
a) de 80 à 99,9 % en masse d'au moins un pigment de type 1,4-dicétopyrrolo[3,4-c]pyrrole,
b) de 0,1 à 20 % en masse d'une composition contenant 3 dicétopyrrolopyrroles ayant les formules I, II et III selon la revendication 1 ou un dicétopyrrolopyrrole de formule II, les pigments de type 1,4-dicétopyrrolo[3,4-c]pyrrole selon a) étant différents de la composition selon b) et du dicétopyrrolopyrrole de formule II.

4. Compositions de pigments selon la revendication 3, **caractérisées en ce que** l'on utilise comme constituant b) de 0,1 à 20 % en masse d'une composition contenant 3 dicétopyrrolopyrroles ayant les formules I, II et III selon la revendication 1.

5. Compositions de pigments selon la revendication 3, **caractérisées en ce que** a) contient un 1,4-dicétopyrrolo[3,4-c]pyrrole de formule 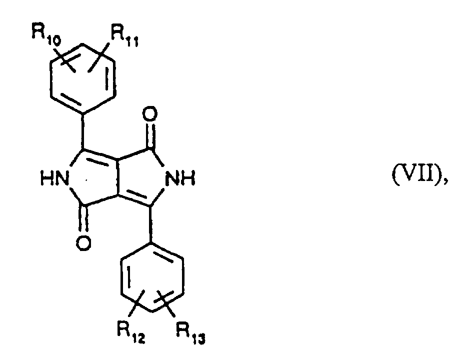 dans laquelle R₁₀, R₁₁, R₁₂ et R₁₃ représentent indépendamment les uns des autres un atome d'hydrogène ou un groupe Cl, Br, CH₃, OCH₃, C(CH₃)₃, CN ou phényle.

6. Compositions de pigments selon la revendication 3, **caractérisées en ce qu'**elles contiennent des 1,4-dicétopyrrolo[3,4-c]pyrroles de formule VII et une composition contenant 3 dicétopyrrolopyrroles ayant les formules I, II, III, dans lesquelles
R₁₁ et R₁₃ représentent des atomes d'hydrogène et
R₁₀, R₁₂ et R₁ sont identiques.

7. Compositions de pigments selon la revendication 6, **caractérisées en ce que** R₁₀, R₁₂ et R₁ représentent des groupes méthyle, tert-butyle, tert-amyle, phényle ou chloro.

8. Composition **caractérisée en ce qu'**elle contient un matériau organique de masse molaire élevée et une composition de pigments selon la revendication 3.

9. Procédé de préparation d'un matériau organique de masse molaire élevée, **caractérisé en ce qu'**on y introduit une quantité efficace pour la coloration d'une composition de pigments selon la revendication 3.

10. Matériau organique de masse molaire élevée préparé selon la revendication 9, **caractérisé en ce qu'**il s'agit d'un vernis ou d'une encre d'impression.
